# EUROPEAN PATENT SPECIFICATION

(11) **EP 2 181 015 B1**
(45) Date of publication and mention of the grant of the patent: **16.05.2012**
(21) Application number: 08754902.8
(22) Date of filing: 02.04.2008
(51) Int. Cl.: B60L 1/02, H05B 3/34, B60N 2/56

(54) **HEATER DEVICE**
HEIZVORRICHTUNG
DISPOSITIF DE CHAUFFAGE

(30) Priority: 02.04.2007 US 909590 P
(43) Date of publication of application: 05.05.2010
(73) Proprietor: Saunders, Darrel Burton, Simpsonville, SC 29681 (US)
(72) Inventor: Saunders, Darrel Burton, Simpsonville, SC 29681 (US)
(74) Representative: Penny, Daryl
(86) International application number: PCT/US2008/059155
(87) International publication number: WO 2008/122043

(56) References cited:
- DE-U1- 29 922 947
- US-A- 4 314 145
- US-A- 4 833 300
- US-A- 5 408 069
- US-A1- 2007 052 760
- US-B1- 7 053 344
- US-B1- 7 053 344
- US-B2- 7 108 931

## Description

### BACKGROUND

The present disclosure pertains to heater devices. More particularly, the present disclosure pertains to relatively thin heater devices useful in various applications including but not limited to various automotive applications such as seats and steering wheels.

Applications may be found for relatively thin heater devices within the automotive industry and beyond if, their performance can be improved. Such applications can be limited by factors including but not limited to economy and reliability. There remains a need to provide a heater device configuration that may be produced economically and provide reliable heating with improved performance.
US-B1-7,053,344 relates to a heater comprising the features of the precharacterising portion of claim 1.

### SUMMARY

Disclosed herein in an exemplary embodiment is a heater for a variety of applications including but not limited to automotive applications such as steering wheel heaters and seat cushion heaters. The heater disclosed herein produces heat when connected to electric current. The heater device includes a substrate composed of an electrically insulative material. The substrate has a first surface and a second surface body portion. The heater also has a resistive material layer defined on at least a portion of at least one surface of the substrate. The resistive material layer has a sheet resistance between 10 ohm/sq and 20,000 ohm/sq. The heater also has a buss structure in communication with the resistive material layer. The buss structure has at least two elements and is configured to introduce current into the resistive layer with the current traveling in at least one current path in the resistive layer. The heater device is characterised in that it has at least one geometrically configured current directing structure defined on the resistive material layer at a location between two elements of the buss structure and positioned discrete therefrom, so that the current directing structure is not in physical contact with the at least two elements of the buss structure.
Further features of preferred embodiments of the invention are disclosed in the dependent claims.

### BRIEF DESCRIPTION OF THE DRAWINGS

The description herein makes reference to the accompanying drawings in which like reference numerals refer to like parts throughout the several views and wherein:

Fig. 1 is a plan view of a first embodiment of a heater device according to one embodiment as disclosed herein;

Fig. 2A is simplified cross-sectional view of the device of Fig. 1 taken along the 2-2 line in Fig. 1;

Fig. 2B is a detail cross-sectional view of node 44 of the heater device depicted in Fig. 1;

Fig 2C is a detail cross-sectional view of ground buss structure of Fig. 2;

Fig. 2D is a detail cross-sectional view of an alternate exemplary embodiment of ground buss structure of Fig. 2;

Fig. 3A is a detail view of the geometrically configured current directing structure of Fig. 1 as disclosed herein;

Fig. 3B is a first alternate configuration of the representative geometrically configured current directing structure of Fig. 1;

Fig. 3C is a second alternate configuration of the representative geometrically configured current directing structure of Fig. 1;

Fig 4 is a top view of a second exemplary embodiment of the heater device as disclosed herein;

Fig 5 is a cross-sectional view taken along the 5-5 line of Fig. 4;

Fig. 6 is a top view of a third exemplary embodiment of the heater device as disclosed herein;

Fig. 7 is a cross-sectional view of the device of Fig. 6 taken along the 7-7 line of Fig. 6;

### DETAILED DESCRIPTION

Disclosed herein is a heater device for producing heat when electric current is applied. As disclosed, the device includes a substrate composed of an electrically insulative material, a resistive layer defined on at least a portion of the substrate, and a buss structure defined in communication with the resistive layer. The buss structure has at least two elements configured to introduce current into the resistive layer. The introduced current travels along at least one current path. The heater device also includes at least one geometrically configured current directing structure defined on the resistive layer at a location between at least two elements of the buss structure and positioned in detached relationship separate from the buss structure.

It is contemplated that the heater device as disclosed herein may have a variety of specific configurations depending upon the end use for the given heater device. Various embodiments of the heater device as disclosed herein will be discussed in detail. It is to be understood that the various embodiments and variations disclosed herein are to be considered as illustrative and exemplary, if within the scope of the invention as defined in the claims.

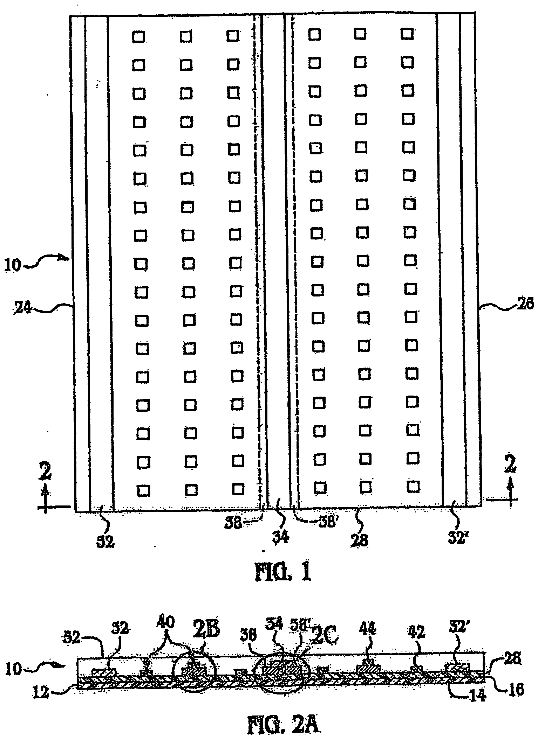

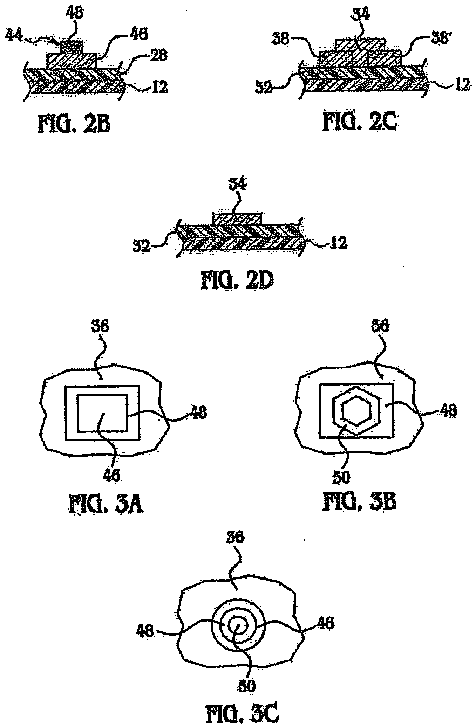

The heater device 10 depicted in Figs. 1 and 2 include a substrate 12 that includes or is composed of a suitable dielectric material. Dielectric materials that can be employed include various polymers and polymeric compositions. Nonlimiting examples of such materials include various poly amides, polyimides, polyethylenes and the like. Where desired or required, it is contemplated that various other materials may be employed as the substrate. Nonlimiting examples of suitable additional substrate materials are ceramic materials and the like. The substrate material may be flexible or rigid depending on the desired end use application. Flexible materials may be in the form of polymeric films where desired or required.

The materials employed in the substrate 12 may be inherently dielectric or may be rendered so by means of additives, doping agents and the like as desired or required. The dielectric capacity of the material employed in the substrate 12 is generally that sufficient to contain and direct current applied to various components of the heater device 10. In certain embodiments and applications it is contemplated that the polymeric material employed will have a volume resistivity as defined by ASTM 257-91 greater that 1014 ohm cm at a film gauge of 5 mil and a dielectric constant as defined by ASTM 150-92 of approximately 3.5 or greater. In certain situations, it is contemplated that the substrate material may be thru conductive in the Z-axis orientation depending on the end-use.

Nonlimiting examples of materials that may be employed in the substrate are materials such as Kapton® commercially available from DuPont®. Without being bound to any theory, it is believed that Kapton® materials are a polyimide material that can be readily formed into configurations such as films and can remain stable in a wide range of temperatures, from including to as high as 269 °C to 400 °C. The material functions as a dielectric and is believed to have a dielectric constant of 4.0 at 1 kHz when tested in accordance to ASTM 150-94. Nonlimiting examples of suitable polyimides include materials such as poly (4, 4-oxydiphenylene-pyromellitimide) such as those having the general formula:

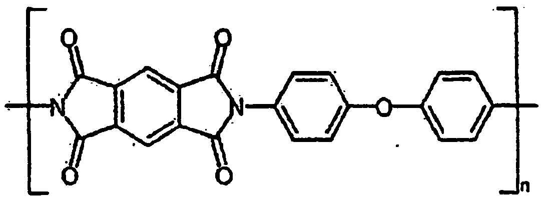

Suitable commercially available materials include but are not limited to materials such as various RS types of Kapton® film material. These materials are two-sided layers of polyimide and carbon and are believed to be conductive in the X-Y axis in a range between 100 ohm/sq to 1000 ohm/sq. Other materials that may be used in various embodiments as disclosed herein include but are not limited to, Kapton® MT that is believed to be X-Y-Z axis conductive. It is believed that MT films are blended polyimide/carbon materials having conductivities of 300 ohm or greater. It is also within the purview of this disclosure to employ materials such as Kapton® HN. It is believed that HN materials are polyimide film materials such as Peralux.

The substrate may be composed of one or multiple layers as desired or required. In the embodiment depicted in Figs. 1 and 2, the substrate 12 is a unitary layer. The substrate 12 may be of any suitable thickness for the desired end-use application however, it is generally contemplated that the substrate 12 will have a thickness sufficient to support the various heater elements positioned thereon. The substrate 12 may be configured to be flexible if desired or required. However, it is also considered within the purview of the disclosure that the substrate 12 may be configured to be rigid or semi-rigid as desired or required. The material may have any suitable thickness. Various nonlimiting examples of material thicknesses are those between 10 and 1000 mils. Depending upon the desired end-use application, the substrate thickness may be between 15 and 100 mils, with ranges between 15 and 50 mils being contemplated if desired or required.

As depicted in Figs. 1 and 2, the substrate is an elongated planar member having a lower face 14 and an opposed upper face 16 and opposing side edges 24 and 26. Where desired or required, the lower face 14 may have various additional layers attached thereto (not shown). These additional layers may include but are not limited to adhesive layers and the like. It is also considered within the purview of this disclosure that the substrate may have other configurations as desired or required. Where adhesives are employed, it is contemplated that these adhesive material(s) may be affixed to all or part of the lower surface 14. Suitable adhesive materials will be those that can affix that substrate 12 to a suitable corresponding underlying surface such as metal polymeric surfaces or the like..

The heater device 10 also includes a resistive layer 28 that covers at least a portion of the upper surface 16 of the substrate 12. In the embodiment depicted in the Figs 1 and 2, the resistive layer 28 is a discrete layer that is in overlying relationship with the substrate 12. It is contemplated that the resistive layer may overlay essentially all, or at least a portion of, the upper surface 16 of substrate 12 as depicted in Figs. 1 and 2. Alternately, the resistive layer 28 overlies a defined portion of the substrate as desired or required. It is also contemplated resistive layer 28 may be present as a distinct layer as depicted in the embodiment in Figs. 1 and 2.

The resistive layer 28 may be attached to the substrate 12 by any suitable means including but not limited to adhesion, formation in place and the like. While the embodiment depicted in Figs. 1 and 2 depicts a discrete layer region between the respective layers 12 and 28, it is also within the purview of this disclosure that the two respective layers be presenting the form of regions prepared during the formation of the substrate material. Thus, it is contemplated that the resistive material may be applied to the substrate during formation of the substrate layer and adhered by methods such as sintering to form a more unified integrated region. Nonlimiting examples of materials that may be employed in various embodiments of the heater device 10 as disclosed herein include materials such as carbon, graphite and the like.

The resistive layer 28 will have a suitable resistivity to permit conveyance of electric current there through with an associated degree of localized heating of the resistive layer as the electrical current passes through. A nonlimiting example of suitable resistivity is a sheet resistance in the range of (shown at front) 10 ohm/sq to 20,000 ohm/sq at 25 degrees °C as determined by the method outlined in IPOTM 650 method 2.5.1.7.1.

It is contemplated that resistive layer may be made from a suitably durable material or composition. Suitable materials are those that possess resistance values that are inherently within the specified range or may be rendered so, such as by the addition of suitable conductive materials). Nonlimiting examples of such materials include carbon, graphite, steel alumina, carbon black and organic-complexes containing such materials or compounds. Various materials are available commercially.

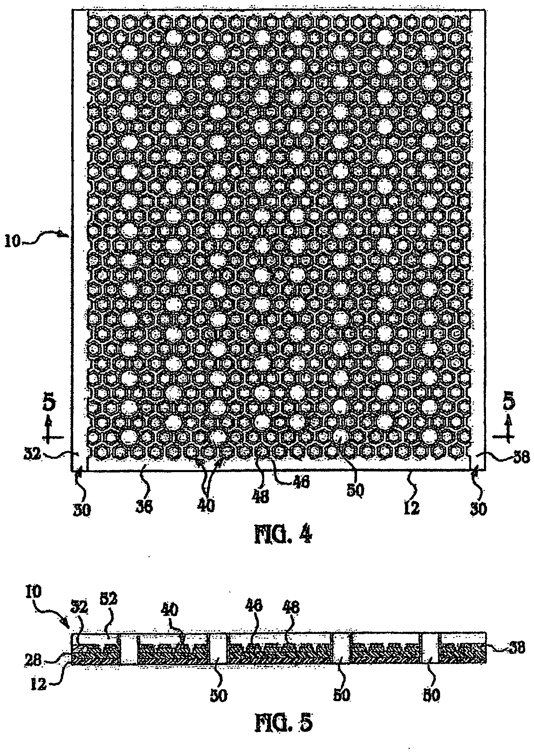

The heater device depicted in Fig. 4 also includes a buss structure 30 that includes at least two elements 32 and 38. The buss structure 30 is configured to introduce electric current into the resistive layer 28. In the embodiment depicted in Figs. 1 and 2, the elements 32, 32' and 34 can constitute a main buss as at reference numeral(s) 32 and 32' and a main buss ground as at reference numeral 34. In the embodiment depicted in Fig. 1, the heater element 10 has a pair of main buss element(s) 32, 32' located on an outer surface 36 of resistive layer in electrical contact therewith. It is contemplated that the various members of the buss structure 30 overlie the resistive layer and that at least a portion of the elements of buss structure 30 are in direct contact with the resistive layer 28. In the embodiment depicted in Figs. 1 and 2, it can be seen that the buss elements 32 and 32' are in direct overlying contact with outer surface 36 of the resistive layer 28. The main buss ground 34 is in partial contact with the outer surface 36 due to the interposition of a suitable dielectric or variable resistance layer or layers such as dielectric layer(s) 38 and 38'. Where desired or required, it is contemplated that the variable resistance layer may be eliminated or modified.

In the embodiment depicted in Figs. 1 and 2, the buss structure 30 includes two main buss elements 32 and 32' on opposed sides of the structure with a ground buss, 34 interposed at a location in between the main buss elements 32 and 32'. It is also considered within the purview of this disclosure to have a heater device configuration with a single main buss element as well as other variations and configurations of buss elements as desired or required.

The buss structure 30 may be composed of any suitable conductive material. Nonlimiting examples of conductive materials include conductive materials such as at least one of gold, copper, silver, copper, platinum palladium, aluminum carbon graphite and the like as well as suitable organic compositions and complexes containing such metals. It is also contemplated that the material employed in the buss structure may be one that is inherently conductive such as polyanaline and polypyrrole. The buss structure 30 may be applied to the resistive layer 28 in any manner that will permit and promote transference of electrical current.

The introduced current will travel through the resistive layer 28 in the manner discussed subsequently. The specific structure and composition of the buss structure material may be one that also facilitates application to the resistive layer 28. Thus, the material may be an ink composition capable of application by various processes. Nonlimiting examples include screen-printing, web printing, spray deposition and the like. Nonlimiting examples of materials that are commercially available include various conductive inks of which DuPont® 502S silver is but one example. Other nonlimiting examples of materials that may be employed in the buss structure include various metal foils, wires and the like that may be affixed to the substrate by any suitable manner including but not limited to various conductive adhesive materials.

The heater device 10 also includes at least one geometrically configured current directing structure 40 defined on the resistive material layer 28 at a location between the at least two elements 32 and 34 of the buss structure 30 and positioned in discrete distanced relationship to the buss structure therefore. In the embodiment as depicted in Figs. 1 and 2, the heater device 10 includes a plurality of geometrically configured current directing structures 40 in spaced relationship to one another at discrete locations on the outer surface 36 of the resistive layer 28.

The geometrically configured current directing structure(s) 40 may have any suitable configuration and position relative to one another and to the buss structure 30 in order to direct current in and relative to the resistive layer 28. In the heater device 10 as disclosed, it is believed that the geometrically configured current directing structure(s) 40 will be placed in positions that direct the electrical current in the resistive layer 28 in a manner that permits and facilitates heating of the resistive layer in the desired fashion. In the embodiment as depicted in Figs. 1 and 2, the geometrically configured current directing structure(s) 40 are uniformly spaced linearly over the body of the resistive layer 28. Other orientations and positions are considered within the purview of this disclosure. It is contemplated that the geometrically configured current directing structure(s) may be symmetrically or asymmetrically positioned depending upon the particular end -use application.

In the heater device 10 as disclosed, the geometrically configured current directing structure(s) 40 includes at least one node. It is contemplated that the node is in ohmic contact with the resistive layer 28. The amount of ohmic contact between the node and the resistive layer 28 is that sufficient to alter at least a portion of the path of electrical current introduced in to the resistive layer 28 through the buss structure 30.

The node 40 of the geometrically configured current directing structure 40 may be configured of one or more materials. The materials may be configured as layers or other structures as desired or required. In one example of a simple form, the node of a given geometrically configured current directing structure 40 can be composed of one region or layer. One nonlimiting example of such a node is depicted in Figs. 1 and 2 as node 42. Node 42 as depicted in Figs, 1 and 2 is configured to be in full ohmic contact with the resistive layer 28. In the embodiment as depicted, node 42 has a generally square planar configuration. It is contemplated that the node may have any of a variety of planar configurations as desired or required. Full ohmic contact between the node and the resistive layer may be accomplished in any suitable manner. In the embodiment as depicted in Figs. 1 and 2, node 42 is a geometrically configured region of material in overlying relationship with a discrete region of the resistive layer 28. It is contemplated that the material of node 42 may directly adhere to the surface 36 of resistive layer 28. Alternately, it is also contemplated that the node 42 may be affixed to the surface 36 of resistive layer 28 by any suitable means or mechanism of which interposition of conductive adhesive is but one example.

Node 42 may be composed of any suitable conductive material, various embodiments of the heating device 10 as disclosed herein, node 42 is composed of at least one material that has a resistance value less than the respective sheet resistance value of the associated resistive layer 28. It is contemplated that in situations where the resistance value of the resistive layer is 500 ohm/sq for example, the sheet resistance of the node will be a value below 500 ohm/sq. The absolute difference between the respective resistance values will be one that facilitates and encourages current flow to and through the associated geometrically configured current directing structure 40 in the direction of main ground buss structure 34. Nonlimiting examples of differences between the respective sheet resistance values are in a ratio of at least 2:1, resistance of substrate to resistance of node, respectively, in various load current applications.

The node 42 be composed of any conductive material that permits and facilitates current flow; particularly, but not limited to Z-axis current flow, in a manner that can control or mitigate localized heating. Nonlimiting examples of such materials include at least one of silver, platinum, palladium, gold, copper, iron aluminum and organic compounds thereof.

It is also considered to be within the purview of this disclosure to provide nodes 44 that are in at least partial ohmic contact with the surface 36 of the resistive layer 28. Partial ohmic contact may be accomplished by the interposition or partial interposition of a dielectric or partial dielectric material between the node and the surface 36 of resistive layer 28. In the node 44 as depicted in Figs. 1 and 2, the structure includes at least two regions in relationship to one another. The two respective regions are composed of materials having different characteristics, more specifically and two materials that have different resistivity values.

While two respective regions of the node 44 can be in any configurationally relationship to one another, one nonlimiting example of a suitable relationship of the two respective regions is a stacked layered relationship as depicted in Figs. 1, 2A and 2B. In the stacked relationship depicted in Figs. 1 and 2, the node 44 has at least two regions configured as layers, with a layer region 46 proximate to the surface 36 of the resistive layer 28 and a layer region 48 distal from the surface 36 of resistive layer 28. It is contemplated that the material in the first layer region 46 proximate to the surface 36 of resistive layer 28 will have a first resistivity value. The material in second layer region 48 distal to the surface 36 of resistive layer 28 will have a second resistivity value with the second resistivity being less than the resistivity of the material in the first layer region 46. In many instances, the material of the second layer will have a sheet resistivity greater than the sheet resistivity of the resistive layer 28. While the absolute value of the differences between the resistivites of the respective first and second layer regions 46 and 48 can be any value that facilitates function of the associated geometrically configured current directing structure 40 in the manner intended, nonlimiting examples of the difference between the sheet resistivities between the respective layer regions 46 and 48 of node 44 may be expressed in a ratio of at least 1:2 top region top to center in the X-Y axis. The resistivity can be understood that the resistivity can be greater or less in the Z-axis depending upon the material employed.

The material employed in the second layer region 48 of node 44 may include but is not limited to, at least one of silver, platinum, palladium, gold, copper, iron, aluminum and organic compounds thereof. The material employed in the first layer region 46 of node 44 may include but is not necessarily limited to materials such as various dielectrics, partial dielectric materials variable dielectric materials and the like. In the nonlimiting embodiment depicted in the drawing figures, the second layer region 48 is depicted as having a smaller size or footprint than the first layer 46. It is considered within the purview of this disclosure to have other relative sizes and configurations as desired or required. The respective layers may be of essentially equal size if desired or required.

It is contemplated that materials suitable for use in the first layer region 46 are those that can limit or affect the flow of electrical current to the second layer region 48 in a periodic or continuous manner. The material or materials employed will be capable of conveying electric current in the Z-axis relative to the outer surface 36 of the resistive layer 28. It is contemplated that the material employed in the second layer region 48 will have a resistivity value in the X-Y axis, or sheet state less than the sheet resistivity of the first layer region 46. While the node 44 is depicted as having first and second layers, it is considered within the purview of this disclosure that the node includes any number of layers as desired or required. Typically, the material in the region proximate to the resistive layer has a first resistivity and wherein the second region is distal to the resistive layer and has a second resistivity, wherein the first resistivity is greater than the second resistivity at least in the X-Y axis, but not necessarily in the Z-axis.

Nonlimiting examples of materials that may be employed in the second or upper layer region 48 include silver, platinum, palladium, gold, copper, iron aluminum and organic compounds thereof. It is also contemplated that various organic-metallic complexes having resistivity in the desired ranges can be employed in various embodiments disclosed herein. It is also contemplated that the materials in the first layer region can be various other conductive materials as desired or required.

In certain embodiments, it is contemplated that the first layer region 46 may be composed of a conductive material having a resistivity with a value that falls between the resistivity of the resistive layer 28 and the second layer region 48 of the given node 42. The intermediate layers or layers may act as a choke or a switch for current passing there through.

Depending upon the desired end-use application, it is also contemplated that the material employed in the intermediate layer or layers may have a variable resistivity; i.e., a resistivity that changes with an external characteristic such as pressure, temperature, time and the like. Nonlimiting examples of suitable materials include various positive temperature coefficient (PTC) materials. In certain embodiments, it is contemplated that the material will be a polymeric PTC material.

Where PTC materials are employed, it is contemplated that various carbon based positive temperature coefficient polymers may be effectively employed. In certain embodiments, it is contemplated that positive temperature coefficient of resistance materials based on carbon pastes may be employed.

Nonlimiting examples of PTC polymeric materials that can be employed in various embodiments, if desired or required, include materials that exhibit PTC effects that increase with temperature are contemplated herein. In such materials, the PTC is typically 45,000 ppm/C at 35 degrees C with an increase to approximately 70,000 ppm/C at 65 degrees C. Suitable materials may be those in which application of a constant voltage will result in rapid heating followed by equilibrium at a defined elevated temperature specified by at least one of circuit design, heat sink and ambient conditions. Various polymeric systems may be effectively employed in various embodiments as disclosed herein. Suitable materials will typically have operating ranges with upper operation limit thresholds of 60 degrees C or more. Nonlimiting examples of suitable PTC polymers include materials such as various polymeric thick film PTC carbon resisters commercially available from DuPont® Electronic Materials under trade names such as 7281, 7285 and 7271.

It is to be considered within the purview of this disclosure that various geometrically configured current directing structures 40 may have various configurations and constructions depending upon a variety of considerations including but not limited to the desired end use application. It is to be considered within the purview of this disclosure that various geometrically configured current directing structures 40 will have differing numbers of layers containing different materials.

It is contemplated that the layer proximate to the surface 36 of the resistive layer may be applied directly to the resistive layer 28. However, where desired or required, the layer 36 may be applied with a suitable adhesive or bonding tape. Similarly, adhesive materials may be employed between the various layers. It is contemplated that such adhesives will not impair or provide undesirable impedance to current flow. Nonlimiting examples of suitable adhesives include those with Z-axis conductivity. It is contemplated that the current directing structure 40 may be located on the adhesive layer and then adhered with the resistive layer 28.

As indicated previously, the geometrically configured current directing structures 40 may be configured in any suitable size or shape depending upon various considerations includes the end use application of the heater device 10 to which they are applied. Nonlimiting examples of various configurations for individual geometrically shaped current directing devices 40 are found in Figs. 3A, 3B and 3C. It is to be understood that other configurations may be employed as desired or required.

In the embodiment depicted in Fig. 1, the geometrically configured current directing structure 40 is configured as a generally rectilinear shape. Various structures 40 are configured as a single layer of a conductive material and/or a single layer of a variably conductive material. Other geometrically configured current directing structures 40 are configured as multiple layer assemblies with first layer 46 being positioned in overlying relationship to second layer 48.

The geometrically configured current directing structure 40 may have any dimensions appropriate and/or suitable to the end use application. It is contemplated that the geometrically configured current directing structure 40 will have a height as measured from the upper surface 36 of the resistive layer 28 in a range between about 0.4 mils and 2.5 mils in a multilayer configuration. Where a single layer configuration is contemplated, the geometrically configured current directing structure may be thinner, or in the range of 0.2 mils or greater.

Various other configurations are contemplated for the geometrically configured current directing structure(s) 40. In Fig. 3B1 the geometrically configured current directing structure has a first layer 46 having a rectilinear outer edge and a hexagonal opening defined herein. The hexagonal opening surrounds an aperture 50 defined in the substrate 12. In the alternate embodiment as set forth in Fig. 3C, geometrically configured current directing structure 40 has an essentially circular shape with first layer or region 48 defining the outer perimeter of the geometrically configured current directing structure 40. A smaller second region 46 overlies the first region or layer 46. Collectively the layers 46 and 48 surround an aperture 50 defined in the resistive layer 28 and associated substrate 12.

Where desired or required, the heater device 10 as depicted in Fig. 1 can also include a suitable dielectric layer 52 in overlying relationship with the upper surface 36 of resistive layer 12 and elements defined thereon. The dielectric layer 52, where employed, may overlie the various elements also present on the surface of resistive layer 28, such as the buss elements 32, 32', 34 as well as the various geometrically configured current directing structure(s) 40.

The dielectric layer 52 may be composed of any suitable material of which materials such as DuPont® 5018 A is but one example. The dielectric layer of choice will be one that protects the various components present on the surface 36 of resistive layer 12 from wear and damage while maintaining a suitable insulation between these components and the regions outside the heater device. Suitable dielectric materials will be those that can permit heat transfer from the resistive layer 28 to regions external to the heater device 10.

It is contemplated that the regions external to the heater device 10 may be various covers, solid surfaces or the like depending upon the end use application of the heater device 10 such as a cover in a vehicle seat. The various nonlimiting examples of applications for this and other embodiments of the heater device 10 herein will be disclosed subsequently.

An alternate embodiment of the heater device 10 as disclosed herein is set forth in Fig. 4. The embodiment of the heater device 10 as set forth in Fig. 4 can include the substrate 12 with resistive layer 28 as discussed previously. A suitable buss structure 30 is positioned on the outer surface 36 of resistive layer 28. While the buss structure 30 can be configured as discussed previously in conjunction with Fig. 1, the embodiment in Fig. 4 depicts a nonlimiting example of alternate structure in which buss structure 30 is composed of a buss element 32 positioned parallel to one outer edge of the substrate with a ground buss 38 positioned parallel to an opposite edge of substrate 12. The substrate 12, resistive layer 28 and buss structure 30 can be composed of any suitable materials as described previously.

In addition to the octagonal geometrically configured current directing structures 40 positioned in spaced relationship over the outer surface 36 of the resistive layer 28, the heater device 10 may include a plurality of geometric apertures 50 in spaced relationship over the total surface area of the device 10. The apertures are defined in the substrate 12 and may include any suitable configuration or size. As depicted herein, the through apertures 50 are circular in configuration. The heater device 10 also includes a suitable dielectric layer 52 as described previously.

It is contemplated that the apertures 50 may be employed to increase airflow and/or heat transfer, facilitate flexibility and the like. In the embodiment as depicted in Figs. 4 and 5, the geometrically configured current directing structures 40 are positioned at a spaced distance from either element 32, 38 of buss structure 30. This current introduced through the buss structure 30 flows in the resistive layer 28 and is redirected at locations to the geometrically configured current directing structures 40 and back into the resistive layer 28. Without being bound to any theory, it is believed that the presence and positioning of the geometrically configured current directing structures 40 permits and facilitates current passage through the resistive layer 28.

The geometrically configured current directing structures 40 as depicted in Fig. 4 are composed of a first layer 46 and a second layer 48, as described previously. It is also contemplated that other structures and configurations can be employed. In the embodiment as depicted in Fig. 4, the geometrically configured current directing structure includes a first or upper layer 46 and an interposed second or middle layer 48. In one embodiment, these respective layers can be a polymeric PTC in the second or middle layer 48 overlaid by a silver material in the upper layer 46. In one alternate embodiment, the upper silver layer may be applied to an adhesive layer that is registered with the middle layer and adhered thereto.

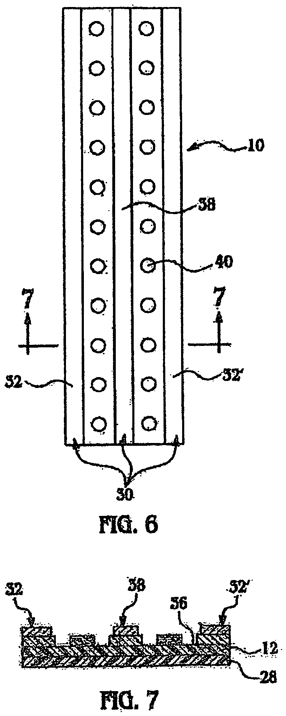

It is also contemplated that the heater device 10 as disclosed herein may be configured as an elongated ribbon as depicted in Figs. 6 and 7. The heater device 10 depicted in Figs. 6 and 7 includes a substrate 12 having a conductive layer 28 attached thereto. A buss structure 30 is affixed to the upper surface 36 of the conductive layer 28. The buss structure 30 as depicted includes buss elements 32 and 32' proximate to the outer edges of the substrate 12. The buss structure 30 also includes a central ground buss 38 located in a region defined between the respective elements 32 and 32', As depicted in Fig. 6, the ground buss is centrally located between the respective buss elements 32 and 32'.

The elements of the buss 30 may be composed of any suitable material. In the embodiment depicted in Figs. 6 and 7, the buss elements 32, 32' and 38 are a metal foil such as copper, silver, or the like. The buss elements can be affixed to the upper surface 36 of the resistive layer 28 by any suitable adhesive. It is contemplated that the adhesive employed in at least some of the applications will be one that is conductive, specifically, one that is conductive in the Z-axis. Nonlimiting examples of such materials are Z-axis conductive adhesives, such as those commercially available from 3M® Corporation under trade designations such as 5460R.

The heater device 10 as depicted in Figs. 6 and 7 also includes a plurality of geometrically configured current directing structures 40 in ohmic contact with the resistive layer 28 located in a spaced relationship from the various elements of the bus structure. As depicted in Figs. 6 and 7, the geometrically configured current directing structures 40 are in spaced relationship to one another along the longitude of the heater device 10. It is contemplated that each end of the heater device 10 may optionally include various rivets or other anchoring devices.

The heater device 10 as depicted in Figs. 6 and 7 may also include a suitable dielectric layer 52 in overlying contact with elements of the buss structure 30 and the geometrically configured current directing structures 40. It is also contemplated that the geometrically configured current directing structures 40 include at least two layers with the at least one intermediate layer being a material having a resistivity between the values of the resistive layer 28 and the respective upper layer.

It is also contemplated to configure the elongated strip heater device 10 without geometrically configured current directing structures. Where desired or required, it is contemplated that the heater device may have a central ground buss 38 being configured as the ground buss in Fig. 1.

The heater device 10 as disclosed herein can be utilized in a variety of end use applications various examples include, but are not limited to vehicle seat heaters and various fluid heaters such as air heaters. In such configurations, it is to be understood that the respective devices can include appropriate power cords, controllers and the like (not shown).

## Claims

1. A heater device (10) for producing heat when connected to an electrical power source, the heater comprising:
a substrate (12) comprising a resistive material (28), the substrate having a first surface (14) and a second surface (16), wherein the resistive material has a sheet resistance between 10 ohm/sq and 20,000 ohm/sq defined on at least a portion of at least one surface of the substrate;
a buss structure in communication with the resistive material layer (28), the buss structure having at least two elements (32, 32') and configured to introduce current into the resistive material, the current traveling in at least one current path; and
at least one geometrically configured current directing structure (40) defined on the resistive material (28) at a location between the at least two elements (32, 32') of the buss structure,
**characterised in that** the at least one geometrically configured current directing structure (40) is positioned discrete from the at least two elements (32, 32') of the buss structure, so that the current directing structure is not in physical contact with the at least two elements of the buss structure.

2. The heater (10) of claim 1 wherein the geometrically configured current directing structure (40) includes at least one node (44), wherein the node is in ohmic contact with the resistive material (28) and the ohmic contact alters at least a portion of the current path.

3. The heater (10) of claim 2 wherein the geometrically configured current directing structure (40) is composed of at least one material having a resistance value less than the respective sheet resistance value of the associated resistive material (28).

4. The heater (10) of claim 3 wherein the node (44) is in full ohmic contact with the resistive material (28).

5. The heater (10) of claim 2 wherein the node (44) comprises at least two regions (46, 48) composed of different materials.

6. The heater (10) of claim 5 wherein the node (44) comprises at least two layers and the material in the region (46) proximate to the resistive material (28) has a first resistivity and the second region (48) is distal to the resistive layer and have a second resistivity and the first resistivity is greater than the second resistivity.

7. The heater (10) of claim 1 wherein the substrate (12) is a flexible polymeric layer containing at least one of a polyimide, a polyamide and a polyester.

8. The heater (10) of claim 1 wherein the resistive material (28) contains at least one of carbon and graphite.

9. The heater (10) of claim 1 wherein the buss structure contains at least one of silver, platinum, palladium, gold, copper, iron, aluminum and organic compounds thereof.

10. The heater (10) of claim 1 wherein the geometrically configured current directing structure (40) includes at least one first region in ohmic contact with the conducting layer, the at least one first region containing at least one conductive material including at least one of silver, platinum, palladium, gold, copper, iron, aluminum and organic compounds thereof.

11. The heater (10) of claim 10 wherein the geometrically configured current directing structure (40) includes at least one additional region, the at least one additional region interposed between at least a portion of the first region and the resistive material, the additional region layer having a surface resistivity greater than surface resistivity of the first region, and a Z-axis resistivity less than the surface resistivity of the resistive material.

12. The heater (10) of claim 10 wherein the geometrically configured current directing structure (40) includes at least one additional region, the at least one additional region interposed between at least a portion of the first region and the resistive material, the additional region having a resistivity that varies with at least one of temperature, pressure and electric current flow.

13. The heater (10) of claim 12 wherein the additional region contains at least one of PTC and pressure sensitive material.

14. The heater (10) of claim 12 wherein the resistive material (28) overlies an entirety of at least one of the first or second surfaces of the substrate.

15. The heater (10) of claim 11 wherein the substrate (12) has at least one aperture (50) defined therein and the geometrically configured current directing structure (40) surrounds at least a portion of the aperture.

16. The heater (10) of claim 1,
wherein the substrate (12) is composed of an insulative material,
the resistive material (28) forms a layer selectively positioned on the substrate and further defines a current conveying structure conveying current in an X-Y plane; and
the at least one geometrically configured current directing structure (40) is further positioned a discrete distance from the elements (32, 32') of the buss structure and is configured to convey current in to a Z-axis relative to the X-Y plane of the substrate.

17. The heater (10) of claim 16, wherein the geometrically configured current directing structure (40) includes at least one island, the geometrically configured current directing structure is in ohmic contact with the resistive layer (28), and the ohmic contact alters at least a portion of the current path in to the Z-axis and wherein the geometrically configured current directing structure is composed of at least one material having a resistance value less than the respective sheet resistance value of the associated resistive layer.

18. The heater (10) of claim 16, wherein the buss structure is applied to an adhesive layer and the adhesive layer secures the buss structure to the resistive layer (28).

19. The heater (10) of claim 1, wherein the substrate (12) comprises an insulative material.

20. The heater (10) of claim 1, wherein the substrate (12) comprises an insulative layer comprising a dielectric material.

21. The heater (10) of claim 1, wherein the heater device is self-regulating.

## Patentansprüche

1. Heizvorrichtung (10) für das Erzeugen von Wärme bei Anschluss an eine elektrische Energiequelle, wobei die Heizvorrichtung aufweist:
ein Substrat (12), das ein Widerstandsmaterial (28) aufweist, wobei das Substrat eine erste Oberfläche (14) und eine zweite Oberfläche (16) aufweist, wobei das Widerstandsmaterial einen an zumindest einem Teil von zumindest einer Oberfläche definierten Schichtwiderstand von zwischen 10 bis 20.000 Ohm hat;
eine mit der Widerstandsmaterialschicht (28) verbundene Busstruktur, wobei die Busstruktur zumindest zwei Elemente (32, 32') aufweist und zum Einspeisen von Strom in das Widerstandsmaterial ausgebildet ist, und wobei der Strom zumindest entlang eines Strompfades fließt; und
zumindest eine geometrisch ausgebildete Stromführungsstruktur (40), die auf dem Widerstandsmaterial (28) an einer zwischen den zumindest zwei Elementen (32, 32') der Busstruktur gelegenen Stelle definiert ist,
**dadurch gekennzeichnet, dass** die zumindest eine geometrisch ausgebildete Stromführungsstruktur (40) getrennt von den zumindest zwei Elementen (32, 32') der Busstruktur angeordnet ist, sodass sich die Stromführungsstruktur nicht in direktem Kontakt mit den zumindest zwei Elementen (32, 32') der Busstruktur befindet.

2. Heizung (10) nach Anspruch 1, wobei die geometrisch ausgebildete Stromführungsstruktur (40) zumindest eine Brücke (44) umfasst, und wobei sich die Brücke mit dem Widerstandsmaterial (28) in ohmschen Kontakt befindet und der ohmsche Kontakt zumindest einen Teil des Strompfades verändert.

3. Heizung (10) nach Anspruch 2, wobei die geometrisch ausgebildete Stromführungsstruktur (40) aus zumindest einem Material aufgebaut ist, das einen geringeren Widerstandswert aufweist als der entsprechende Schichtwiderstandswert des zugehörigen Widerstandsmaterials (28).

4. Heizung (10) nach Anspruch 3, wobei sich die Brücke (44) mit dem Widerstandsmaterial (28) in vollständig ohmschen Kontakt befindet.

5. Heizung (10) nach Anspruch 2, wobei die Brücke (44) zumindest zwei Bereiche (46, 48) aufweist, die aus unterschiedlichen Materialien gebildet sind.

6. Heizung (10) nach Anspruch 5, wobei die Brücke (44) zumindest zwei Schichten aufweist und das Material in dem dem Widerstandsmaterial (28) nächsten Bereich (46) einen ersten spezifischen Widerstand aufweist und der entfernter zur Widerstandsschicht gelegene zweite Bereich (48) einen zweiten spezifischen Widerstand aufweist, wobei der erste spezifische Widerstand größer als der zweite spezifische Widerstand ist.

7. Heizung (10) nach Anspruch 1, wobei es sich bei dem Substrat (12) um eine flexible Polymerschicht handelt, die zumindest eines der folgenden Polymere enthält: Polyimid, Polyamid und/oder Polyester.

8. Heizung (10) nach Anspruch 1, wobei das Widerstandsmaterial (28) zumindest Kohlenstoff und/oder Graphit enthält.

9. Heizung (10) nach Anspruch 1, wobei die Busstruktur zumindest eines der folgenden Elemente/Verbindungen enthält: Silber, Platin, Palladium, Gold, Kupfer, Eisen, Aluminium und deren organische Verbindungen.

10. Heizung (10) nach Anspruch 1, wobei die geometrisch ausgebildete Stromführungsstruktur (40) zumindest einen ersten Bereich umfasst, der sich in ohmschen Kontakt mit der leitfähigen Schicht befindet, wobei der zumindest eine erste Bereich zumindest ein leitfähiges Material enthält, das zumindest eines der folgenden Elemente/Verbindungen umfasst: Silber, Platin, Palladium, Gold, Kupfer, Eisen, Aluminium und deren organische Verbindungen.

11. Heizung (10) nach Anspruch 10, wobei die geometrisch ausgebildete Stromführungsstruktur (40) zumindest einen zusätzlichen Bereich umfasst, wobei sich der zumindest eine zusätzliche Bereich zwischen zumindest einem Teil des ersten Bereichs und dem Widerstandsmaterial befindet, und wobei die zusätzliche Bereichsschicht einen Oberflächenwiderstand aufweist, der größer ist als der Oberflächenwiderstand des ersten Bereichs und einen spezifischen Widerstand entlang der Z-Achse, der kleiner ist als der Oberflächenwiderstand des Widerstandsmaterials.

12. Heizung (10) nach Anspruch 10, wobei die geometrisch ausgebildete Stromführungsstruktur (40) zumindest einen zusätzlichen Bereich umfasst, und wobei sich der zumindest eine zusätzliche Bereich zwischen zumindest einem Teil des ersten Bereichs und dem Widerstandsmaterial befindet, wobei der zusätzliche Bereich einen spezifischen Widerstand aufweist, der sich mit der Temperatur und/ oder dem Druck und/ oder dem elektrischen Stromfluss ändert.

13. Heizung (10) nach Anspruch 12, wobei der zusätzliche Bereich ein PTC- und/oder druckempfindliches Material enthält.

14. Heizung (10) nach Anspruch 12, wobei das Widerstandsmaterial (28) auf der gesamten ersten und/oder zweiten Oberfläche des Substrats aufliegt.

15. Heizung (10) nach Anspruch 11, wobei das Substrat (12) zumindest eine darin definierte Öffnung (50) aufweist und die geometrisch ausgebildete Stromführungsstruktur (40) zumindest einen Teil der Öffnung umgibt.

16. Heizung (10) nach Anspruch 1, worin
das Substrat (12) aus einem isolierenden Material gebildet ist;
das Widerstandsmaterial (28) eine selektiv auf dem Substrat angeordnete Schicht bildet und ferner eine Stromführungsstruktur definiert, die Strom in einer X-Y-Ebene führt; und
zumindest eine geometrisch ausgebildete Stromführungsstruktur (40) ferner in einem bestimmten Abstand von den Elementen (32, 32') der Busstruktur angeordnet und dazu ausgebildet ist, einen Strom zu einer Z-Achse relativ zu der X-Y-Ebene des Substrats zu führen.

17. Heizung (10) nach Anspruch 16, wobei die geometrisch ausgebildete Stromführungsstruktur (40) zumindest eine Insel umfasst, und wobei sich die geometrisch ausgebildete Stromführungsstruktur mit der Widerstandsschicht (28) in ohmschen Kontakt befindet und der ohmsche Kontakt zumindest einen Teil des Strompfades zur Z-Achse hin abändert, und wobei die geometrisch ausgebildete Stromführungsstruktur aus zumindest einem Material gebildet ist, dessen spezifischer Widerstandswert geringer als der entsprechende Schichtwiderstandswert der zugehörigen Widerstandsschicht ist.

18. Heizung (10) nach Anspruch 16, wobei die Busstruktur auf eine Klebstoffschicht aufgebracht ist und die Klebstoffschicht die Busstruktur an der Widerstandsschicht (28) befestigt.

19. Heizung (10) nach Anspruch 1, wobei das Substrat (12) ein isolierendes Material umfasst.

20. Heizung (10) nach Anspruch 1, wobei das Substrat (12) eine isolierende Schicht aufweist, die ein dielektrisches Material umfasst.

21. Heizung (10) nach Anspruch 1, wobei die Heizvorrichtung selbstregulierend ausgebildet ist.

## Revendications

1. Dispositif de chauffage (10) pour produire de la chaleur lorsqu'il est raccordé à une source d'alimentation électrique, le dispositif de chauffage comprenant :
un substrat (12) comprenant un matériau résistif (28), le substrat ayant une première surface (14) et une deuxième surface (16), où le matériau résistif présente une résistance par carré comprise entre 10 ohms/sq et 20 000 ohms/sq définie sur au moins une partie d'au moins une surface du substrat ;
une structure de bus en communication avec la couche du matériau résistif (28), la structure de bus ayant au moins deux éléments (32, 32') et étant configurée pour introduire du courant dans le matériau résistif, le courant se déplaçant dans au moins un trajet de courant ; et
au moins une structure (40) de guidage de courant à configuration géométrique définie sur le matériau résistif (28) à un emplacement entre les au moins deux éléments (32, 32') de la structure de bus,
**caractérisé en ce que** l'au moins une structure (40) de guidage de courant à configuration géométrique est positionnée de manière discrète par rapport aux au moins deux éléments (32, 32') de la structure de bus, de sorte que la structure de guidage de courant ne soit pas en contact physique avec les au moins deux éléments de la structure de bus.

2. Dispositif de chauffage (10) de la revendication 1, dans lequel la structure (40) de guidage de courant à configuration géométrique comprend au moins un noeud (44), où le noeud est en contact ohmique avec le matériau résistif (28) et le contact ohmique modifie au moins une partie du trajet de courant.

3. Dispositif de chauffage (10) de la revendication 2 dans lequel la structure (40) de guidage de courant à configuration géométrique est composée d'au moins un matériau ayant une valeur de résistance inférieure à la valeur de résistance par carré respective du matériau résistif associé (28).

4. Dispositif de chauffage (10) de la revendication 3, dans lequel le noeud (44) est en contact ohmique total avec le matériau résistif (28).

5. Dispositif de chauffage (10) de la revendication 2 dans lequel le noeud (44) comprend au moins deux régions (46, 48) composées de matériaux différents.

6. Dispositif de chauffage (10) de la revendication 5 dans lequel le noeud (44) comprend au moins deux couches et le matériau dans la région (46) à proximité du matériau résistif (28) présente une première résistivité et la deuxième région (48) est distale par rapport à la couche résistive et a une deuxième résistivité qui est inférieure à la première résistivité.

7. Dispositif de chauffage (10) de la revendication 1 dans lequel le substrat (12) est une couche polymère flexible contenant au moins l'un parmi le polyimide, le polyamide et le polyester.

8. Dispositif de chauffage (10) de la revendication 1, dans lequel le matériau résistif (28) contient au moins l'un parmi le carbone et le graphite.

9. Dispositif de chauffage (10) de la revendication 1, dans lequel la structure de bus contient au moins un élément parmi l'argent, le platine, le palladium, l'or, le cuivre, le fer, l'aluminium et leurs composés organiques.

10. Dispositif de chauffage (10) de la revendication 1, dans lequel la structure (40) de guidage de courant à configuration géométrique comprend au moins une première région en contact ohmique avec la couche conductrice, l'au moins une première région contenant au moins un matériau conducteur comprenant au moins un élément parmi l'argent, le platine, le palladium, l'or, le cuivre, le fer, l'aluminium et leurs composés organiques.

11. Dispositif de chauffage (10) de la revendication 10, dans lequel la structure (40) de guidage de courant à configuration géométrique comprend au moins une région supplémentaire, l'au moins une région supplémentaire étant interposée entre au moins une partie de la première région et le matériau résistif, la couche de la région supplémentaire ayant une résistivité de surface supérieure à celle de la première région, et une résistivité sur l'axe Z inférieure à la résistivité de surface du matériau résistif.

12. Dispositif de chauffage (10) de la revendication 10, dans lequel la structure (40) de guidage de courant à configuration géométrique comprend au moins une région supplémentaire, l'au moins une région supplémentaire étant interposée entre au moins une partie de la première région et le matériau résistif, la région supplémentaire ayant une résistivité qui varie avec au moins un paramètre parmi la température, la pression et le flux de courant électrique.

13. Dispositif de chauffage (10) de la revendication 12, dans lequel la région supplémentaire contient au moins l'un d'un matériau PTC et d'un matériau sensible à la pression.

14. Dispositif de chauffage (10) de la revendication 12, dans lequel le matériau résistif (28) recouvre l'ensemble d'au moins l'une de la première ou de la deuxième surfaces du substrat.

15. Dispositif de chauffage (10) de la revendication 11, dans lequel le substrat (12) a au moins une ouverture (50) qui y est définie et la structure (40) de guidage de courant à configuration géométrique entoure au moins une partie de l'ouverture.

16. Dispositif de chauffage (10) de la revendication 1,
dans lequel le substrat (12) est composé d'un matériau isolant,
le matériau résistif (28) forme une couche positionnée au choix sur le substrat et définit en outre une structure de transport de courant transportant le courant dans un plan XY ; et
l'au moins une structure (40) de guidage de courant à configuration géométrique est en outre positionnée à une distance discrète des éléments (32, 32') de la structure de bus et est configurée pour transporter un courant dans un axe Z par rapport au plan XY du substrat.

17. Dispositif de chauffage (10) de la revendication 16, dans lequel la structure (40) de guidage de courant à configuration géométrique comprend au moins un îlot, la structure de guidage de courant à configuration géométrique est en contact ohmique avec la couche résistive (28), et le contact ohmique altère au moins une partie du trajet du courant dans l'axe Z et dans lequel la structure de guidage de courant à configuration géométrique est composée d'au moins un matériau ayant une valeur de résistance inférieure à la valeur de résistance par carré respective de la couche résistive associée.

18. Dispositif de chauffage (10) de la revendication 16, dans lequel la structure de bus est appliquée à une couche adhésive et la couche adhésive lie la structure de bus à la couche résistive (28).

19. Dispositif de chauffage (10) de la revendication 1, dans lequel le substrat (12) comprend un matériau isolant.

20. Dispositif de chauffage (10) de la revendication 1, dans lequel le substrat (12) comprend une couche isolante comprenant un matériau diélectrique.

21. Dispositif de chauffage (10) de la revendication 1, dans lequel le dispositif de chauffage est à régulation automatique.
